# EUROPEAN PATENT APPLICATION

(11) **EP 3 187 447 A1**
(43) Date of publication of application: **05.07.2017**
(21) Application number: 17150306.3
(22) Date of filing: 04.01.2017
(51) Int. Cl.: B66B 1/24, B66B 1/46

(54) **METHOD FOR MANAGING CROWD CONTROL IN AN ELEVATOR LOBBY**

(30) Priority: 04.01.2016 US 201662274407 P
(71) Applicant: Otis Elevator Company, Farmington, Connecticut 06032 (US)
(72) Inventor: WITCZAK, Tadeusz Pawel, Farmington, CT Connecticut 06032 (US); HSU, Arthur, East Hartford, CT Connecticut 06108 (US); GINSBERG, David, East Hartford, CT Connecticut 06108 (US); PASINI, Jose Miguel, East Hartford, CT Connecticut 06108 (US); D'ONOFRIO, Elia, Derby, CT Connecticut 06418 (US)
(74) Representative: Ramsay, Laura Anne

(57) **Abstract**

A system and method for lobby crowd control dispatching in a multi-car ropeless lift (MCRL) system is provided. The method includes: receiving, at a controller (425), a call request for a transport device (414, 414N), in the lobby from a user using a destination device (436, 436N); generating, using a processor of the controller (425), a call assignment based on a crowd parameter; controlling, using the processor of the controller (425), the transport device(414, 414N) based on the crowd parameter; and transmitting, from the controller (425), the call assignment to the user using the destination device (436, 436N). The system includes a transport device (414, 414N) that arrives and departs from the lobby, a destination device (436, 436N) that receives a call request from a user for the transport device (414, 414N) in the lobby, and a controller (425) that is communicatively connected to the transport device (414, 414N) and the destination device (436, 436N).

## Description

### BACKGROUND

The subject matter disclosed herein generally relates to the field of elevators, and more particularly to crowd control for a lobby of a transport device such as a multicar, ropeless elevator system.

Ropeless elevator systems, also referred to as self-propelled elevator systems, are useful in certain applications (e.g., high rise buildings) where the mass of the ropes for a roped system is prohibitive and there is a desire for multiple elevator cars to travel in a single hoistway, elevator shaft, or lane. There exist ropeless elevator systems in which a first lane is designated for upward traveling elevator cars and a second lane is designated for downward traveling elevator cars. A transfer station at each end of the lane is used to move cars horizontally between the first lane and second lane. Further, ropeless elevator systems can provide for core space reduction which is directly related to reductions in lobby cross sectional area in elevatoring hoistways and bay dimensions.

The lobby for such transport device, particularly the ropeless elevator described above, is a space where crowds can form affecting the efficiency with which the transport device can be utilized and the user experience. Further, ropeless elevators provide the ability to change bay dimensions in the lobby to optimize and reduce a lobby size. However, optimizing the bay dimensions can have an impact on bay and lobby crowdedness resulting in a change in efficiency and a passenger experience. Therefore, there exists a desire to somehow optimize the bay dimensions while crowdedness and the passenger experience remains within acceptable limits.

### BRIEF DESCRIPTION

According to one embodiment a method for managing crowd control in a lobby is provided. The method includes receiving, at a controller, a call request for a transport device in the lobby from a user using a destination device, generating, using a processor of the controller, a call assignment based on a crowd parameter, controlling, using the processor of the controller, the transport device based on the crowd parameter, and transmitting, from the controller, the call assignment to the user using the destination device.

In addition to one or more of the features described above, or as an alternative, further embodiments may include, wherein the call request includes at least one of a lobby usage data file that contains a transport device usage request and a lobby location of the user, wherein the transport device is arriving and departing from the lobby, a user profile including one or more of a user identification file, user usage preferences, and user parameters. The user parameters may include one or more of a user volume parameter, a user mass parameter, a user location parameter, a user speed parameter, a user timing parameter, a user scheduling parameter, and a user information parameter.

In addition to one or more of the features described above, or as an alternative, further embodiments may include, wherein the transport device is at least one of an elevator and a ropeless elevator.

In addition to one or more of the features described above, or as an alternative, further embodiments may include, wherein the transport device is at least one of an aircraft, a watercraft, a spacecraft, a train, a tram, and a motor vehicle.

In addition to one or more of the features described above, or as an alternative, further embodiments may include, wherein the destination device is at least one of a mobile electronic device and a stationary electronic device, wherein the mobile electronic device is at least one of a smart phone, a wearable electronic device, and an RFID tag, and wherein the stationary electronic device is at least one of a kiosk, a digital panel, and a computer terminal.

In addition to one or more of the features described above, or as an alternative, further embodiments may include, wherein the call assignment includes at least one or more of a transport bay assignment within the lobby to a transport bay of the transport device for the user, a lobby location for the user to queue from for transport device loading, a travel path for the user to follow to the transport bay or lobby location, a travel path time value that estimates the travel time to the transport bay or lobby location, and a transport device schedule timing value that estimates a time remaining before the transport device arrives at the lobby.

In addition to one or more of the features described above, or as an alternative, further embodiments may include, wherein the crowd parameter includes at least one of a volume parameter, a mass parameter, a location parameter, a speed parameter, a timing parameter, a scheduling parameter, a crowd information parameter, and data from the call request.

In addition to one or more of the features described above, or as an alternative, further embodiments may include, wherein generating, using the processor of the controller, the call assignment based on the crowd parameter includes collecting the crowd parameter, processing the crowd parameter, creating the call assignment and populating the call assignment with data from the processed crowd parameter, and storing the call assignment in a storage medium of the controller.

In addition to one or more of the features described above, or as an alternative, further embodiments may include, wherein collecting the crowd parameter includes collecting the crowd parameter using a sensor, wherein the sensor is at least one of an acoustic sensor, an image sensor, a video sensor, a weight sensor, a movement sensor, a location sensor, an infrared sensor, and a depth sensor.

According to another embodiment a system for managing crowd control in a lobby, is provided. The system includes a transport device that arrives and departs from the lobby, a destination device that receives a call request from a user for the transport device in the lobby, and a controller that is communicatively connected to the transport device and the destination device, wherein the controller receives the call request from the destination device, generates a call assignment based on a crowd parameter, controls the transport device based on the crowd parameter, and transmits the call assignment to the destination device.

In addition to one or more of the features described above, or as an alternative, further embodiments may include, wherein the call request includes at least one of a lobby usage data file that contains a transport device usage request and a lobby location of the user, wherein the transport device is arriving and departing from the lobby, a user profile including one or more of a user identification file, user usage preferences, and user parameters, wherein the user parameters include one or more of a user volume parameter, a user mass parameter, a user location parameter, a user speed parameter, a user timing parameter, a user scheduling parameter, and a user information parameter.

In addition to one or more of the features described above, or as an alternative, further embodiments may include, wherein the transport device is at least one of an elevator and a ropeless elevator.

In addition to one or more of the features described above, or as an alternative, further embodiments may include, wherein the transport device is at least one of an aircraft, a watercraft, a spacecraft, a train, a tram, and a motor vehicle.

In addition to one or more of the features described above, or as an alternative, further embodiments may include, wherein the destination device is at least one of a mobile electronic device and a stationary electronic device, wherein the mobile electronic device is at least one of a smart phone, a wearable electronic device, and an RFID tag, and wherein the stationary electronic device is at least one of a kiosk, a digital panel, and a computer terminal.

In addition to one or more of the features described above, or as an alternative, further embodiments may include, wherein the call assignment includes at least one or more of a transport bay assignment within the lobby to a transport bay of the transport device for the user, a lobby location for the user to queue from for transport device loading, a travel path for the user to follow to the transport bay or lobby location, a travel path time value that estimates the travel time to the transport bay or lobby location, a transport device schedule timing value that estimates a time remaining before the transport device arrives at the lobby.

In addition to one or more of the features described above, or as an alternative, further embodiments may include, wherein the crowd parameter includes at least one of a volume parameter, a mass parameter, a location parameter, a speed parameter, a timing parameter, a scheduling parameter, a crowd information parameter, and data from the call request.

In addition to one or more of the features described above, or as an alternative, further embodiments may include, wherein the controller generates the call assignment based on the crowd parameter by being further configured to collect the crowd parameter, process the crowd parameter, create the call assignment and populating the call assignment with data from the processed crowd parameter, and store the call assignment in a storage medium of the controller.

In addition to one or more of the features described above, or as an alternative, further embodiments may include, wherein the controller collects the crowd parameter by being further configured to collect the crowd parameter using a sensor, wherein the sensor is at least one of an acoustic sensor, an image sensor, a video sensor, a weight sensor, a movement sensor, a location sensor, an infrared sensor, and a depth sensor.

According to another embodiment a computer program product for managing crowd control in a lobby is provided. The computer program product includes a computer readable storage medium having program instructions embodied therewith, the program instructions executable by a processor to cause the processor to receive, at a controller, a call request for a transport device in the lobby from a user using a destination device, generate, using a processor of the controller, a call assignment based on a crowd parameter inapplicable, control, using the processor of the controller, the transport device based on the crowd parameter, and transmit, from the controller, the call assignment to the user using the destination device.

In addition to one or more of the features described above, or as an alternative, further embodiments may include, wherein generating, using the processor of the controller, the call assignment based on the crowd parameter includes collecting the crowd parameter using a sensor, processing the crowd parameter, creating the call assignment and populating the call assignment with data from the processed crowd parameter, and storing the call assignment in a storage medium of the controller, wherein the sensor is at least one of an acoustic sensor, an image sensor, a video sensor, a weight sensor, a movement sensor, a location sensor, an infrared sensor, and a depth sensor.

Technical features include providing crowd control to a lobby of a multicar, ropeless elevator system. Further technical features of embodiments include an efficient power distribution system with redundant power supply and control. Further technical features of embodiments include providing a battery backup system that enables self-sufficiency of a power supply system. Further technical features of embodiments include a redundant, distributive, and regenerative power distribution system.

### BRIEF DESCRIPTION OF THE DRAWINGS

The foregoing and other features and advantages are apparent from the following detailed description taken in conjunction with the accompanying drawings in which:
FIG. 1 depicts a multicar elevator system in accordance with an exemplary embodiment;
FIG. 2 depicts a single elevator car within a multicar elevator system in accordance with an exemplary embodiment;
FIG. 3 depicts a schematic block diagram of a system for managing crowd control in a lobby in accordance with an exemplary embodiment;
FIG. 4 depicts a schematic block diagram of a system for managing crowd control in a lobby in accordance with an exemplary embodiment;
FIG. 5 depicts a schematic block diagram of a system for managing crowd control in a lobby in accordance with an exemplary embodiment;
FIG. 6A is a top view of an elevator lobby in accordance with an exemplary embodiment;
FIG. 6B is a side view of the elevator lobby as shown in FIG. 6A in accordance with an exemplary embodiment;
FIG. 7A is a flowchart of a method for managing crowd control in a lobby in accordance with an exemplary embodiment; and
FIG. 7B is a flowchart of sub-operations within an operation of the method as shown in FIG. 7A in accordance with an exemplary embodiment.

### DETAILED DESCRIPTION

One or more embodiments described herein are directed to a method and/or system for a transport device, such as a ropeless elevator with optional sensors and controls, for dispatching elevators and users to help control crowdedness, efficiency, and user experience. The system includes a controller connected to both the transport device and a destination device used by the user. This method and system could provide reduction in bay dimensions to benefit building core space reduction. The system and method could also provide an improved passenger experience and reduce boarding times.

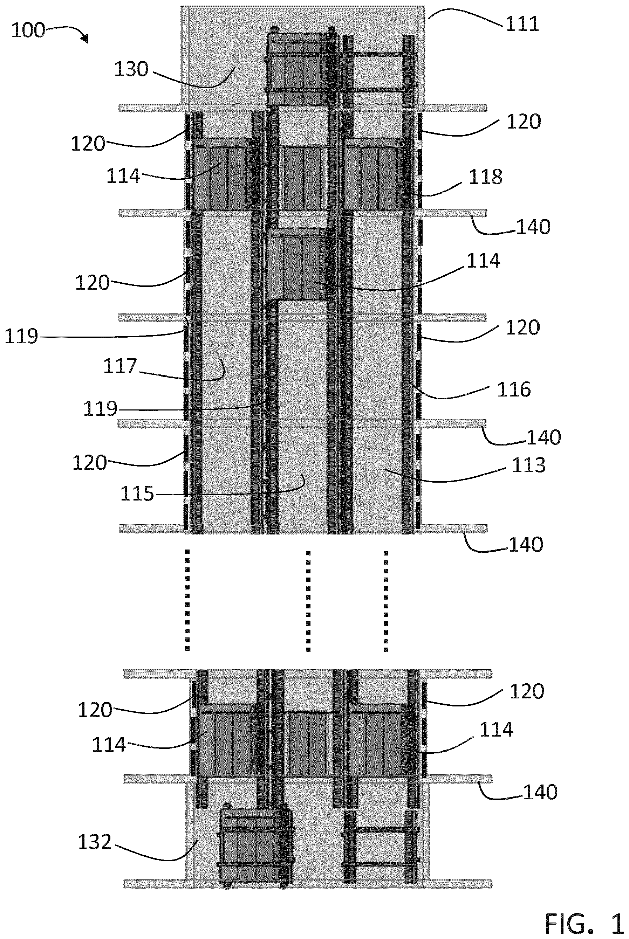

Turning now to FIG. 1, an exemplary multicar, ropeless elevator system 100 is depicted that may be employed with embodiments. Elevator system 100 includes an elevator shaft 111 having a plurality of lanes 113, 115 and 117. While three lanes 113, 115, 117 are shown in FIG. 1, it is understood that various embodiments and various configurations of a multicar, ropeless elevator system may include any number of lanes, either more or fewer than the three lanes shown in FIG. 1. In each lane 113, 115, 117, multiple elevator cars 114 can travel in one direction, i.e., up or down, or multiple cars within a single lane may be configured to move in opposite directions. For example, in FIG. 1 elevator cars 114 in lanes 113 and 115 travel up and elevator cars 114 in lane 117 travel down. Further, as shown in FIG. 1, one or more elevator cars 114 may travel in a single lane 113, 115, and 117.

As shown, above the top accessible floor of the building is an upper transfer station 130 configured to impart horizontal motion to the elevator cars 114 to move the elevator cars 114 between lanes 113, 115, and 117. It is understood that upper transfer station 130 may be located at the top floor, rather than above the top floor. Similarly, below the first floor of the building is a lower transfer station 132 configured to impart horizontal motion to the elevator cars 114 to move the elevator cars 114 between lanes 113, 115, and 117. It is understood that lower transfer station 132 may be located on the first floor, rather than below the first floor. Although not shown in FIG. 1, one or more intermediate transfer stations may be configured between the lower transfer station 132 and the upper transfer station 130. Intermediate transfer stations are similar to the upper transfer station 130 and lower transfer station 132 and are configured to impart horizontal motion to the elevator cars 114 at the respective transfer station, thus enabling transfer from one lane to another lane at an intermediary point within the elevator shaft 111. Further, although not shown in FIG. 1, the elevator cars 114 are configured to stop at a plurality of floors 140 to allow ingress to and egress from the elevator cars 114.

Elevator cars 114 are propelled within lanes 113, 115, 117 using a propulsion system such as a linear, permanent magnet motor system having a primary, fixed portion 116 and a secondary, moving portion 118. The primary portion 116 includes windings or coils mounted on a structural member 119, and may be mounted at one or both sides of the lanes 113, 115, and 117, relative to the elevator cars 114. Specifically, primary portions 116 will be located within the lanes 113, 115, 117, on walls or sides that do not include elevator doors.

The secondary portion 118 includes permanent magnets mounted to one or both sides of cars 114, i.e., on the same sides as the primary portion 116. The secondary portion 118 engages with the primary portion 116 to support and drive the elevators cars 114 within the lanes 113, 115, 117. Primary portion 116 is supplied with drive signals from one or more drive units 120 to control movement of elevator cars 114 in their respective lanes through the linear, permanent magnet motor system. The secondary portion 118 operatively connects with and electromagnetically operates with the primary portion 116 to be driven by the signals and electrical power. The driven secondary portion 118 enables the elevator cars 114 to move along the primary portion 116 and thus move within a lane 113, 115, and 117.

The primary portion 116, as shown in FIG. 1, is formed from a plurality of motor segments 122, with each segment associated with a drive unit 120. Although not shown, the central lane 115 of FIG. 1 also includes a drive unit for each segment of the primary portion 116 that is within the lane 115. Those of skill in the art will appreciate that although a drive unit 120 is provided for each motor segment 122 of the system (one-to-one) other configurations may be used without departing from the scope of the disclosure.

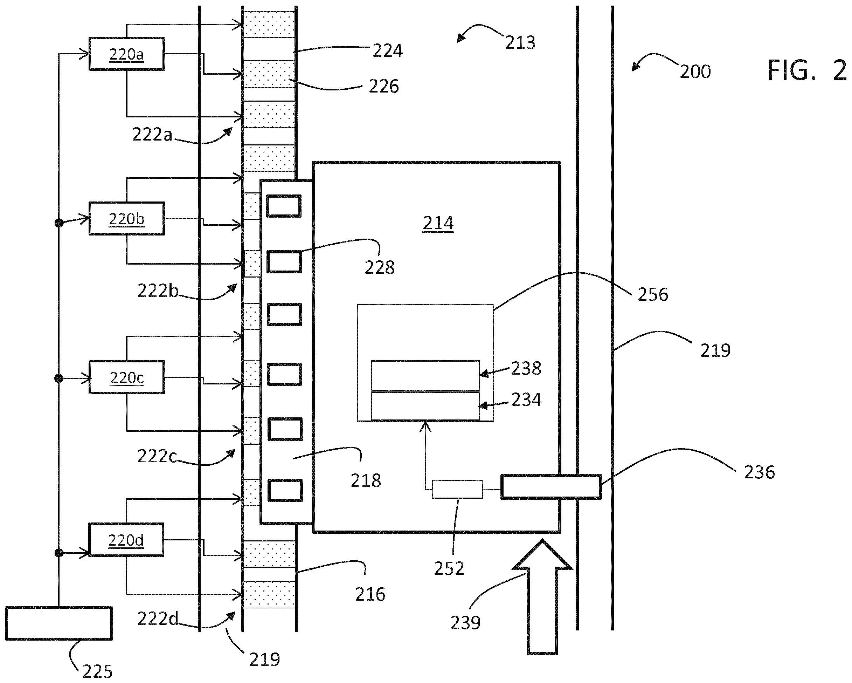

Turning now to FIG. 2, a view of an elevator system 200 including an elevator car 214 that travels in lane 213 is shown. Elevator system 200 is substantially similar to elevator system 100 of FIG. 1 and thus like features are preceded by the number "2" rather than the number "1." Elevator car 214 is guided by one or more guide rails 224 extending along the length of lane 213, where the guide rails 224 may be affixed to a structural member 219. For ease of illustration, the view of FIG. 2 only depicts a single guide rail 224; however, there may be any number of guide rails positioned within the lane 213 and may, for example, be positioned on opposite sides of the elevator car 214. Elevator system 200 employs a linear propulsion system as described above, where a primary portion 216 includes multiple motor segments 222a, 222b, 222c, 222d each with one or more coils 226 (i.e., phase windings). The primary portion 216 may be mounted to guide rail 224, incorporated into the guide rail 224, or may be located apart from guide rail 224 on structural member 219. The primary portion 216 serves as a stator of a permanent magnet synchronous linear motor to impart force to elevator car 214. The secondary portion 218, as shown in FIG. 2, is mounted to the elevator car 214 and includes an array of one or more permanent magnets 228 to form a second portion of the linear propulsion system of the ropeless elevator system. Coils 226 of motor segments 222a, 222b, 222c, 222d may be arranged in three phases, as is known in the electric motor art. One or more primary portions 216 may be mounted in the lane 213, to contact with permanent magnets 228 mounted to elevator car 214. Although only a single side of elevator car 214 is shown with permanent magnets 228 the example of FIG. 2, the permanent magnets 228 may be positioned on two or more sides of elevator car 214. Alternate embodiments may use a single primary portion 216/secondary portion 218 configuration, or multiple primary portion 216/secondary portion 218 configurations.

In the example of FIG. 2, there are four motor segments 222a, 222b, 222c, 222d depicted. Each of the motor segments 222a, 222b, 222c, and 222d has a corresponding or associated drive 220a, 220b, 220c, and 220d. A system controller 225 provides drive signals to the motor segments 222a, 222b, 222c, 222d via drives 220a, 220b, 220c, 220d to control motion of the elevator car 214. The system controller 225 may be implemented using a microprocessor executing a computer program stored on a storage medium to perform the operations described herein. Alternatively, the system controller 225 may be implemented in hardware (e.g., ASIC, FPGA) or in a combination of hardware/software. The system controller 225 may also be part of an elevator control system. The system controller 225 may include power circuitry (e.g., an inverter or drive) to power the primary portion 216. Although a single system controller 225 is depicted, it will be understood by those of ordinary skill in the art that a plurality of system controllers may be used. For example, a single system controller may be provided to control the operation of a group of motor segments over a relatively short distance, and in some embodiments a single system controller may be provided for each drive unit or group of drive units, with the system controllers in communication with each other.

In some exemplary embodiments, as shown in FIG. 2, the elevator car 214 includes an on-board controller 256 with one or more transceivers 238 and a processor, or CPU, 234. The on-board controller 256 and the system controller 225 collectively form a control system where computational processing may be shifted between the on-board controller 256 and the system controller 225. In some exemplary embodiments, the processor 234 of on-board controller 256 is configured to monitor one or more sensors and to communicate with one or more system controllers 225 via the transceivers 238. In some exemplary embodiments, to ensure reliable communication, elevator car 214 may include at least two transceivers 238 configured for redundancy of communication. The transceivers 238 can be set to operate at different frequencies, or communication channels, to minimize interference and to provide full duplex communication between the elevator car 214 and the one or more system controllers 225. In the example of FIG. 2, the on-board controller 256 interfaces with a load sensor 252 to detect an elevator load on a brake 236. The brake 236 may engage with the structural member 219, a guide rail 224, or other structure in the lane 213. Although the example of FIG. 2 depicts only a single load sensor 252 and brake 236, elevator car 214 can include multiple load sensors 252 and brakes 236.

In order to drive the elevator car 214, one or more motor segments 222a, 222b, 222c, 222d can be configured to overlap the secondary portion 218 of the elevator car 214 at any given point in time. In the example of FIG. 2, motor segment 222d partially overlaps the secondary portion 218 (e.g., about 33% overlap), motor segment 222c fully overlaps the secondary portion 218 (100% overlap), and motor segment 222d partially overlaps the secondary portion 218 (e.g., about 66% overlap). There is no depicted overlap between motor segment 222a and the secondary portion 218. In some embodiments, the control system (system controller 225 and on-board controller 256) is operable to apply an electrical current to at least one of the motor segments 222b, 222c, 222d that overlaps the secondary portion 218. The system controller 225 can control the electrical current on one or more of the drive units 220a, 220b, 220c, 220d while receiving data from the on-board controller 256 via transceiver 238 based on load sensor 252. The electrical current may apply an upward thrust force 239 to the elevator car 214 by injecting a constant current, thus propelling the elevator car 214 within the lane 213. The thrust produced by the linear propulsion system is dependent, in part, on the amount of overlap between the primary portion 216 with the secondary portion 218. The peak thrust is obtained when there is maximum overlap of the primary portion 216 and the secondary potion 218.

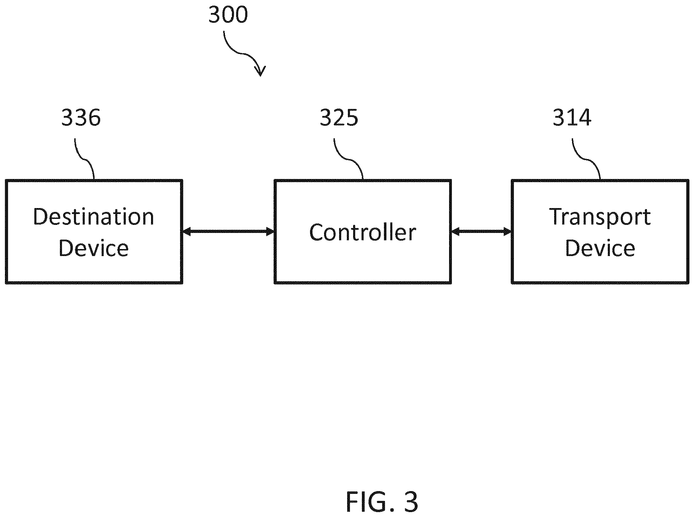

Turning now to FIG. 3, an exemplary embodiment is shown. A system 300 for managing crowd control in a lobby is configured as part of an elevator system, such as described above with respect to FIGS. 1 and 2. Signal transmitters are provided throughout and between the elements in the system 300 to provide the control signals that enables dispatching and propulsion of the elevator cars within a multicar, ropeless elevator system. In a transport device lobby the transport device may be arriving and departing based on a schedule, at random individual times, or upon receiving a dispatch request.

FIG. 3 depicts a schematic block diagram of a system 300 for managing crowd control in a lobby in accordance with an exemplary embodiment. The system 300 includes a controller 325, a transport device 314, and a destination device 336. The controller 325 is communicatively connected to both the destination device 336 and the transport device 314. The connection can be done using a wired connection, a wireless connection, or combination thereof.

The transport device 314 is configured to arrive and depart from the lobby and can be a traditional elevator or a ropeless elevator. In other embodiments the transport device 314 can be an aircraft, a watercraft, a spacecraft, a train, a tram, or a motor vehicle.

The destination device 336 is configured to receive a call request from a user for the transport device 314 in the lobby and transmit that call request to the controller 325. The destination device 336 can be a mobile electronic device or a stationary electronic device. If the destination device 336 is a mobile device, the destination device 336 can be but is not limited to, for example, a smart phone, a wearable electronic device, an RFID tag, a combination thereof, and/or some other mobile electronic device. If the destination device 336 is a stationary device, the destination device 336 can be but is not limited to, for example, a kiosk, a digital panel, a computer terminal, a combination thereof, and/or some other stationary electronic device.

The controller 325 that is communicatively connected to the transport device 314 and the destination device 336 in configured to help control the flow of both the user and transport device 314. Particularly, the controller 325 receives the call request from the destination device 336, generates a call assignment based on a crowd parameter, controls the transport device 314 based on the crowd parameter, and transmits the call assignment to the destination device 336 which provides instructions and information to the user, who may also be referred to as a passenger. The controller 325 can be located anywhere that allows for the controller to be communicatively connected. For example, the controller may be in a kiosk in the lobby. The controller 325 may be in the destination device. Further the controller may be integrally formed in the transport device. Alternatively, the controller 325 can be a standalone device that is located onsite or could be provided offsite and connect the devices over a network that includes a number of other routers and servers.

In one or more embodiments, the call request from a user can include a lobby usage data file that contains a transport device usage request and a lobby location of the user, wherein the transport device 314 is arriving and departing from the lobby. The call request can also include a user profile including one or more of a user identification file, user usage preferences, and user parameters. The user parameters can include one or more of a user volume parameter, a user mass parameter, a user location parameter, a user speed parameter, a user timing parameter, a user scheduling parameter, and a user information parameter.

In one or more embodiments, the call assignment can include a transport bay assignment within the lobby to a transport bay of the transport device 314 for the user. The call assignment can also include a lobby location for the user to queue from for transport device loading. The call assignment can also include a travel path for the user to follow to the transport bay or lobby location and a travel path time value that estimates the travel time to the transport bay or lobby location. The call assignment can also include a transport device 314 schedule timing value that estimates a time remaining before the transport device 314 arrives at the lobby.

In one or more embodiments the crowd parameter can include, but is not limited to, a volume parameter, a mass parameter, a location parameter, a speed parameter, a timing parameter, a scheduling parameter, a crowd information parameter, data from the call request, or a combination thereof.

According to other embodiments, the controller 325 can generate the call assignment based on the crowd parameter by being further configured to collect the crowd parameter, process the crowd parameter, create the call assignment and populating the call assignment with data from the processed crowd parameter, and store the call assignment in a storage medium of the controller.

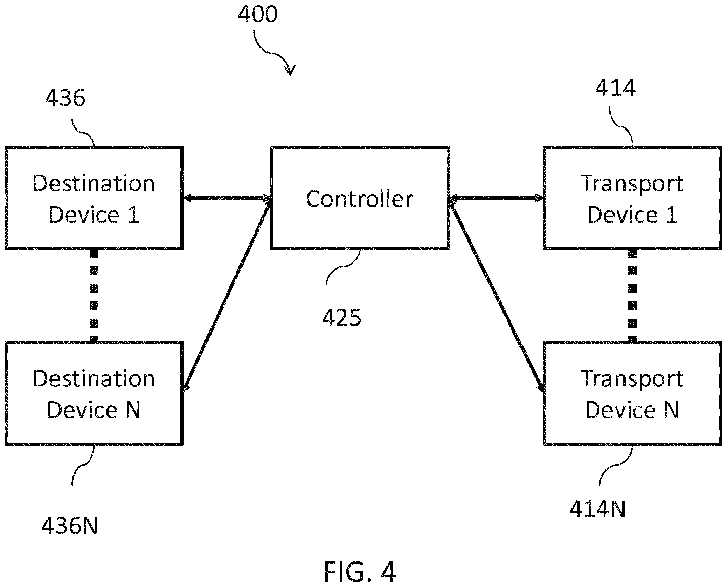

Turning now to FIG. 4, a schematic block diagram of a system 400 is shown for managing crowd control in a lobby in accordance with an exemplary embodiment. The system 400 is similar to system 300 of FIG. 3 except that the system 400 is connected to a plurality of both destination device and transport devices. Specifically, the system 400 includes a controller 425 that is connected to a plurality of destination devices 436 - 436N and a plurality of transport devices 414-414N. Each of the plurality of destination devices 436-436N can be a combination of both mobile and stationary devices that are used by a number of users to send call requests to the controller 425 for transport devices 414-414N. The transport devices 414-414N can be a number of ropeless elevators arranged in elevators bays that make up the elevator lobby. In another embodiment the transport devices 414-414N can be a combination of other transport devices as disclosed above. In other embodiments, the system 400 may include a single destination device and a plurality of transport devices, or alternatively can include a plurality of destination devices and a single transport device, or some combination therein.

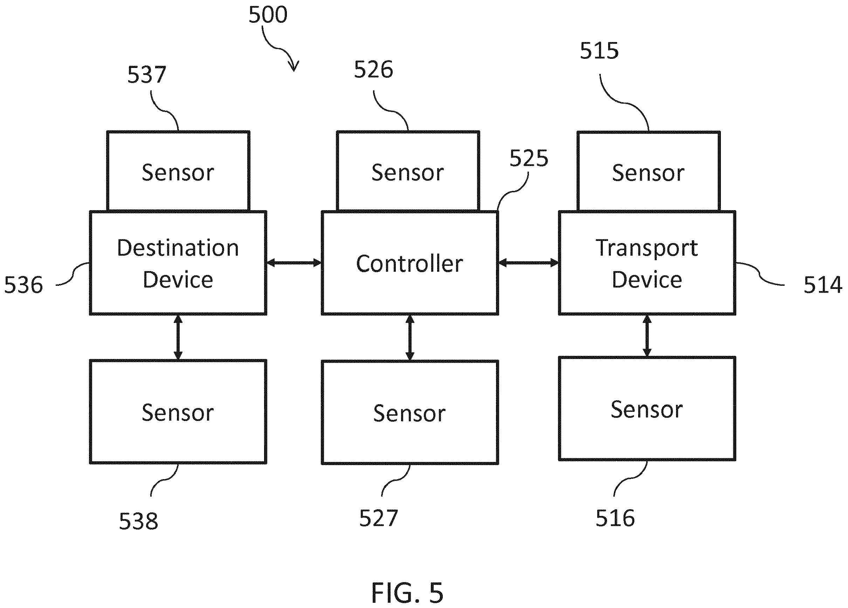

Turning now to FIG. 5, a schematic block diagram of a system 500 for managing crowd control in a lobby in accordance with an exemplary embodiment is shown. The system 500 is similar to the system 300 of FIG. 3. Particularly, system 500 includes a controller 525, a destination device 536, and a transport device 514. In another embodiment, the system 500 may have a plurality of destination devices and transport devices similar to FIG. 4. The system 500 also includes a number of different sensors. Particularly, the system includes sensor 526 that is integrally formed and connected to the controller locally. This sensor 526 can be integrally formed within the housing of the controller 525 or connected in close proximity to the controller 525. The system 500 also include sensor 527 that is remotely connected to the controller 525. Sensor 527 can be connected using a wired or wireless communication scheme. For example, sensor 527 can be a weight sensor placed in front of a kiosk controller. According to another embodiment the sensor 527 can be a video camera or image sensor that transmits the image or video data to the controller 525. The system 500 also includes a sensor 537 that is directly connected to a destination device 536 and a sensor 538 that is remotely connected to the destination device. These sensors can be any known type of sensor. Further the system 500 can include sensor 515 that is directly connected to the transport device 514 and a sensor 516 that is remotely connected to the transport device 514. One or more embodiments could include all the shown sensors or any single one of the sensors or any combination therein. According to another embodiment, a system may include a number of sensors placed at a single location as shown in FIG. 5.

According to other embodiments, the controller 525 collects the crowd parameter by being further configured to collect the crowd parameter using any one or more of the sensors as shown in FIG. 5. The one or more sensors can be an acoustic sensor, an image sensor, a video sensor, a weight sensor, a movement sensor, a location sensor, an infrared sensor, a depth sensor, or a combination of sensors, but is not limited thereto. According to other embodiments, the sensor or sensors used to collected data for the crowd parameter can be any known type of sensor.

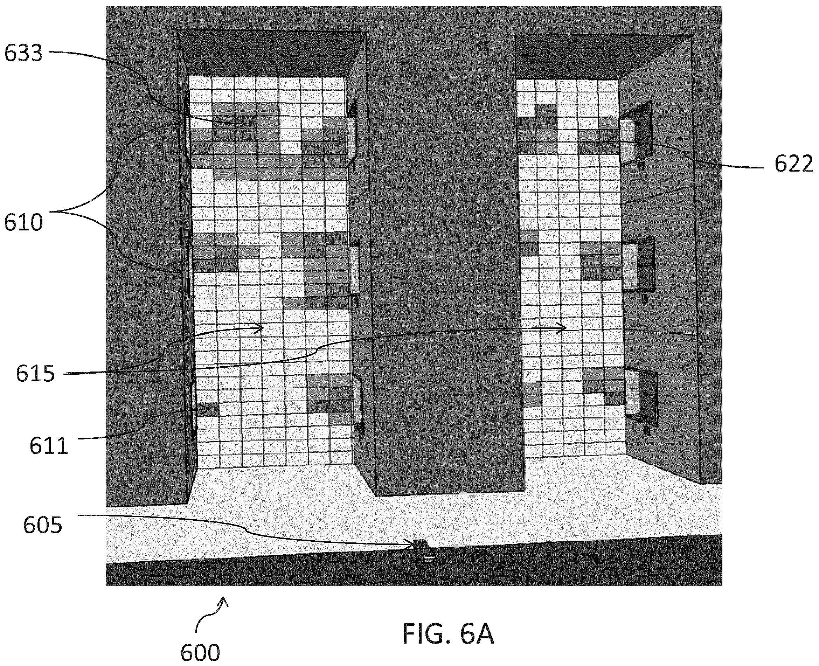

FIG. 6A is a top view of an elevator lobby 600 in accordance with an exemplary embodiment. The elevator lobby 600 includes elevator bays 615, and kiosk 605. In each of the elevator bays 615 are multiple elevator doors 610. FIG. 6A also provides visual representation of crowd parameters in the form of shaded portions that indicate crowd density values that exist at specific points in each of the elevator bays 615 near the elevator doors 610. For example, FIG. 6A show a low traffic area 611 in front of an elevator door. The elevator lobby 600 also includes a medium density traffic area 622 and a high density traffic area 633. The more shaded boxes represented more crowding and the darker shading shows longer waiting at those particular points. These visually represented crowd parameters help visualize the information that can be collected using a number of different sensors that provide the crowd parameters that are used by a system controller to generate a call assignment for a user and to controller the elevators themselves as well.

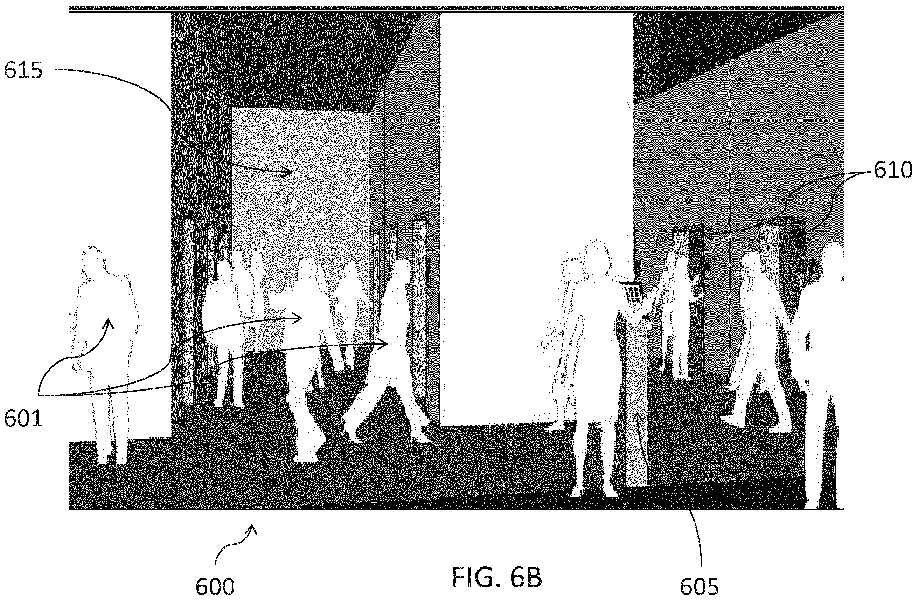

FIG. 6B is a side view of the elevator lobby as shown in FIG. 6A in accordance with an exemplary embodiment. FIG. 6B shows the kiosk 605, elevator bays 615, elevator doors 610, and additional shows some representative users 601, or passengers 601. As show, a user 601 can approach the kiosk 605 and provide a call request for a transport device that is called to one of the elevator doors 610. The call request is sent a controller that collects crowd parameters and processes them to provide an optimized call assignment to the user to a particular elevator. The controller and can also control that elevator to arrive and wait for the user who, based on the received call assignment, will travel to that elevator.

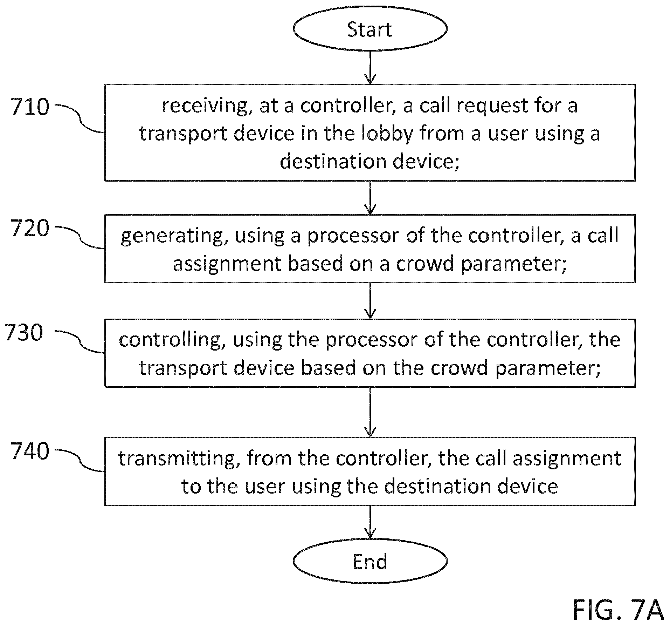

FIG. 7A is a flowchart of a method for managing crowd control in a lobby in accordance with an exemplary embodiment. The method including receiving, at a controller, a call request for a transport device in the lobby from a user using a destination device (operation 710). The method also includes generating, using a processor of the controller, a call assignment based on a crowd parameter (operation 720). The method further includes controlling, using the processor of the controller, the transport device based on the crowd parameter (operation 730). Further, the method includes transmitting, from the controller, the call assignment to the user using the destination device (operation 740).

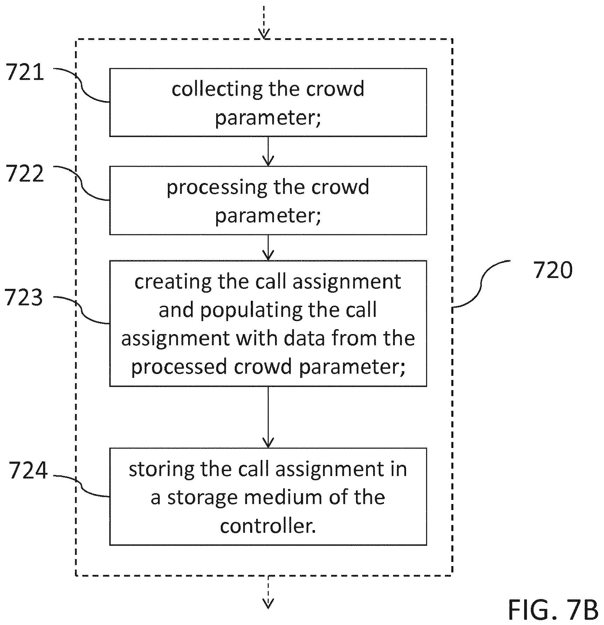

FIG. 7B is a flowchart of sub-operations within an operation of the method as shown in FIG. 7A in accordance with an exemplary embodiment. Particularly, operation 720 as shown in FIG. 7A contain a number of sub-operations. Specifically generating, using the processor of the controller, the call assignment based on the crowd parameter (operation 720 from FIG.7A) includes collecting the crowd parameter (operation 721), processing the crowd parameter (operation 722), creating the call assignment and populating the call assignment with data from the processed crowd parameter (operation 723), and storing the call assignment in a storage medium of the controller (operation 724).

Further, according to another embodiment collecting the crowd parameter can include collecting the crowd parameter using a sensor. The sensor can be an acoustic sensor, an image sensor, a video sensor, a weight sensor, a movement sensor, a location sensor, an infrared sensor, a depth sensor, another known sensor type, or a combination thereof, but is not limited thereto.

According to one or more embodiments, a system and method are provided where the system is an elevator system with optional sensors and controls for dispatching elevators to control crowdedness in order to reduce the footprint required by elevator bays without significant negative impact in passenger experience.

According to one or more embodiments, when minimizing bay dimensions to benefit building core space reduction, lobby crowd density increases. However positive passenger experience levels may be unchanged by assigning passengers in a controlled way and applying crowd density predictions in dispatching logic using any one of the embodiments of a system that includes a controller, destination device, and transport device as disclosed above.

A system and method in accordance with one or more embodiments as described above can provide equal queuing distribution among the group, monitoring or estimating queuing on bay entry that may prevent other passengers from entering the space, variations of assignment based on knowledge about occupancy in arriving cars, assign car/door with zero or less counter traffic to reduce boarding time, and/or monitoring assignments for groups that share bays.

Further a system and method in accordance with one or more embodiments as described above can also prevent waiting periods for passengers from increasing crowdedness by commanding system to move more cars to certain landings based on number of calls and knowledge about lobby sizes. System precision may improve by integration with additional sensors e.g. video monitoring, floor pressure plate sensoring, infrared position sensoring, or acoustic data acquisition.

A system and method in accordance with one or more embodiments as described above can provide additional features as well. For example, assignment of a call will consider the crowdedness of the path from the kiosk to the car, including the current and projected crowdedness in the "lobby bay" and the crowdedness in front of the door at the origin floor as well as at the destination floor. The crowdedness depends both on waiting traffic (i.e., traffic from current floor to another) as well as traffic from passengers exiting at the current floor.

Another feature that a system and method in accordance with one or more embodiments as described above can provide is that the timing associated with a call includes the effect of crowdedness. For example, the estimated time to enter an almost full car is typically longer than the estimated time to enter an empty car. Another example is if it expected that some people are deboarding at the current floor, this will increase the time that car needs to stop at the current floor. Another example is that the assignment of a call to the "rear" of the bay (hence farther from the kiosk) can be accounted for due to extra time to pass through the crowd in the front of the bay.

A system and method in accordance with one or more embodiments as described above can also consider the call assignment not only for the current call, but also anticipates future calls based on the traffic pattern. For example, in non-peak hours, it may be beneficial to assign the closest cars to the kiosk to minimize the walking distance. However, in heavy traffic, the method could balance the assignment of calls to different cars to distribute the crowd more evenly.

A system and method in accordance with one or more embodiments as described above can also include knowledge of the speed of the passenger based on historical data of the passenger as well as trend in the building. Also, sensors in the building and/or on the person (e.g., cell phones, wearable fitness monitors (e.g., FitBit)) can monitor the recent history pattern. For example, on a given day, the system could use knowledge that a particular user has been rushing around or other indicators that the person has been rushing around.

A system and method in accordance with one or more embodiments as described above can also include the use of load information. This can include for example crowd sensing devices and/or sensors that affect the potential elevator usage. These devices include video data from security camera, passive infrared devices, depth sensors, localization devices such as on GPS, indoor localization from Bluetooth or NFC beacons, etc. The coverage areas of interest include the elevator lobby area (e.g., near the kiosks, in the elevator bays), but also inside the elevators as well as other parts of the building such as corridors, entranceways, parking garages, people leaving conference rooms, etc. all of which potentially could be elevator traffic.

Note that the crowd sensing input could be based on elevator inputs (such as the inputs to the kiosk, traffic weighing devices both inside the car as well as outside the car, door transfer counting devices), as well as crowd sensing devices, as well as other information about demand such as shared calendars where the timing and locations of meetings are known for building occupants.

A system and method in accordance with one or more embodiments as described above can include user input as to the size of the load (e.g., at a destination entry kiosk, a user could specify that they have oversize luggage, have children in strollers, or are entering a call for a group of people) or that the loading time will be longer than normal.

A system and method in accordance with one or more embodiments as described above can account for people in wheelchairs and other mobility devices. For example a handicapped call where additional time is allowed can be integrated that takes into account additional information. Particularly, this patent covers the additional space (and weight) that a wheelchair user uses and actually needs in order to freely maneuver inside the elevator, in the waiting area of the origin floor, and at the destination floor.

Another embodiment concerns where a person may require more space based on known medical conditions such as claustrophobia or pregnancy as well as inferred conditions such as elevated body temperature suggesting fever.

A system and method in accordance with one or more embodiments as described above can provide a system that includes the usage of signage, both static and dynamic (programmable displays) to direct people to their queueing areas, to manage the queue location, and to keep certain areas clear of people.

The description above focuses on passengers, but more generally a system and method in accordance with one or more embodiments as described above can cover all elevator traffic including cargo, baggage, carts, pets, etc. The amount of time to board or deboard as well as the amount of space and the weight are accounted by the different types of elevator traffic.

One or more embodiments above focuses on elevator usage, but the system and method in accordance with one or more embodiments as described above can apply to any environment where people receive assignments for some usage of space and where crowdedness is an issue. For example, airports (with assignment to security queues, gates queues, boarding procedures, etc.), trains (with assignment to different doors to cars on the platform given a specific seat assignment), event seating (e.g., stadium, theatre, etc.) and amusement park rides where queues and traffic patterns can be controlled by assignment.

Moreover, advantageously, one or more embodiments can provide core space reduction. For example the system can allow for minimized lobby dimensions. An improved passenger experience may also be provided through control of passenger flow in lobby and its crowdedness. Shorter boarding time may also be provided and design simplification might also be provided using existing sub systems.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description has been presented for purposes of illustration and description, but is not intended to be exhaustive or limited to the embodiments in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand various embodiments with various modifications as are suited to the particular use contemplated.

The present embodiments may be a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Java, Smalltalk, C++, or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present invention are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for managing crowd control in a lobby, the method comprising:
receiving, at a controller, a call request for a transport device in the lobby from a user using a destination device;
generating, using a processor of the controller, a call assignment based on a crowd parameter;
controlling, using the processor of the controller, the transport device based on the crowd parameter; and
transmitting, from the controller, the call assignment to the user using the destination device.

2. The method of claim 1, wherein the call request includes at least one of:
a lobby usage data file that contains a transport device usage request and a lobby location of the user, wherein the transport device is arriving and departing from the lobby;
a user profile including one or more of a user identification file, user usage preferences, and user parameters,
wherein the user parameters include one or more of:
a user volume parameter;
a user mass parameter;
a user location parameter;
a user speed parameter;
a user timing parameter;
a user scheduling parameter; and
a user information parameter.

3. The method of claim 1 or 2,
wherein the transport device is at least one of an elevator and a ropeless elevator, or wherein the transport device is at least one of an aircraft, a watercraft, a spacecraft, a train, a tram, and a motor vehicle.

4. The method of any preceding claim,
wherein the destination device is at least one of a mobile electronic device and a stationary electronic device,
wherein the mobile electronic device is at least one of a smart phone, a wearable electronic device, and an RFID tag, and
wherein the stationary electronic device is at least one of a kiosk, a digital panel, and a computer terminal.

5. The method of any preceding claim,
wherein the call assignment includes at least one or more of:
a transport bay assignment within the lobby to a transport bay of the transport device for the user;
a lobby location for the user to queue from for transport device loading;
a travel path for the user to follow to the transport bay or lobby location;
a travel path time value that estimates the travel time to the transport bay or lobby location; and
a transport device schedule timing value that estimates a time remaining before the transport device arrives at the lobby.

6. The method of any preceding claim, wherein the crowd parameter includes at least one of:
a volume parameter;
a mass parameter;
a location parameter;
a speed parameter;
a timing parameter;
a scheduling parameter;
a crowd information parameter; and
data from the call request.

7. The method of any preceding claim, wherein generating, using the processor of the controller, the call assignment based on the crowd parameter comprises:
collecting the crowd parameter;
processing the crowd parameter;
creating the call assignment and populating the call assignment with data from the processed crowd parameter; and
storing the call assignment in a storage medium of the controller;
wherein collecting the crowd parameter optionally includes:
collecting the crowd parameter using a sensor,
wherein the sensor is at least one of:
an acoustic sensor;
an image sensor;
a video sensor;
a weight sensor;
a movement sensor;
a location sensor;
an infrared sensor; and
a depth sensor.

8. A system for managing crowd control in a lobby, the system comprising,
a transport device that arrives and departs from the lobby;
a destination device that receives a call request from a user for the transport device in the lobby; and
a controller that is communicatively connected to the transport device and the destination device,
wherein the controller receives the call request from the destination device, generates a call assignment based on a crowd parameter, controls the transport device based on the crowd parameter, and transmits the call assignment to the destination device.

9. The system of claim 8, wherein the call request includes at least one of:
a lobby usage data file that contains a transport device usage request and a lobby location of the user, wherein the transport device is arriving and departing from the lobby;
a user profile including one or more of a user identification file, user usage preferences, and user parameters,
wherein the user parameters include one or more of:
a user volume parameter;
a user mass parameter;
a user location parameter;
a user speed parameter;
a user timing parameter;
a user scheduling parameter; and
a user information parameter.

10. The system of claim 8 or 9, wherein the transport device is at least one of an elevator and a ropeless elevator, or
wherein the transport device is at least one of an aircraft, a watercraft, a spacecraft, a train, a tram, and a motor vehicle.

11. The system of any of claims 8-10,
wherein the destination device is at least one of a mobile electronic device and a stationary electronic device,
wherein the mobile electronic device is at least one of a smart phone, a wearable electronic device, and an RFID tag, and
wherein the stationary electronic device is at least one of a kiosk, a digital panel, and a computer terminal.

12. The system of any of claims 8-11,
wherein the call assignment includes at least one or more of:
a transport bay assignment within the lobby to a transport bay of the transport device for the user;
a lobby location for the user to queue from for transport device loading;
a travel path for the user to follow to the transport bay or lobby location;
a travel path time value that estimates the travel time to the transport bay or lobby location;
a transport device schedule timing value that estimates a time remaining before the transport device arrives at the lobby.

13. The system of any of claims 8-12, wherein the crowd parameter includes at least one of:
a volume parameter;
a mass parameter;
a location parameter;
a speed parameter;
a timing parameter;
a scheduling parameter;
a crowd information parameter; and
data from the call request.

14. The system of any of claims 8-13, wherein the controller generates the call assignment based on the crowd parameter by being further configured to:
collect the crowd parameter;
process the crowd parameter;
create the call assignment and populating the call assignment with data from the processed crowd parameter; and
store the call assignment in a storage medium of the controller;
and wherein the controller collects the crowd parameter by being further configured optionally to:
collect the crowd parameter using a sensor,
wherein the sensor is at least one of:
an acoustic sensor;
an image sensor;
a video sensor;
a weight sensor;
a movement sensor;
a location sensor;
an infrared sensor; and
a depth sensor.

15. A computer program product for managing crowd control in a lobby, the computer program product comprising a computer readable storage medium having program instructions embodied therewith, the program instructions executable by a processor to cause the processor to:
receive, at a controller, a call request for a transport device in the lobby from a user using a destination device;
generate, using a processor of the controller, a call assignment based on a crowd parameter inapplicable;
control, using the processor of the controller, the transport device based on the crowd parameter; and
transmit, from the controller, the call assignment to the user using the destination device;
wherein generating, using the processor of the controller, the call assignment based on the crowd parameter optionally comprises:
collecting the crowd parameter using a sensor;
processing the crowd parameter;
creating the call assignment and populating the call assignment with data from the processed crowd parameter; and
storing the call assignment in a storage medium of the controller, wherein the sensor is at least one of:
an acoustic sensor;
an image sensor;
a video sensor;
a weight sensor;
a movement sensor;
a location sensor;
an infrared sensor; and
a depth sensor.
